# EUROPEAN PATENT APPLICATION

(11) **EP 4 794 106 A1**
(43) Date of publication of application: **19.08.2026**
(21) Application number: 26157500.5
(22) Date of filing: 10.02.2026
(51) Int. Cl.: H01M 50/533

(54) **ELECTRODE SHEET, SECONDARY BATTERY AND ELECTRONIC DEVICE**

(30) Priority: 18.02.2025 CN 202520264664 U
(71) Applicant: AESC Japan Ltd., Yokohama-shi, Kanagawa 220-0012 (JP)
(72) Inventor: DAI, Liangzhen, Jiangyin City, Wuxi City (CN); CHEN, Shenghua, Jiangyin City, Wuxi City (CN); KONG, Deyong, Jiangyin City, Wuxi City (CN); ZHANG, Shuhan, Jiangyin City, Wuxi City (CN); CHEN, Lipeng, Jiangyin City, Wuxi City (CN); YIN, Zhe, Jiangyin City, Wuxi City (CN)
(74) Representative: Becker, Eberhard

(57) **Abstract**

The disclosure provides an electrode sheet (300), including: an electrode sheet body (310), and a tab (320) protruding from the electrode sheet body (310) along a first direction (F), the tab (320) is set with a reinforcing rib array (321), the reinforcing rib array (321) includes multiple first reinforcing ribs (322); wherein in the first direction (F), every two adjoining first reinforcing ribs (322) are separated from each other. The purpose of the disclosure lies in providing an electrode sheet (300), a secondary battery (100A/B) and an electronic device (1000), so as to at least strengthen the supporting force for the tab (320).

## Description

### Technical Field

This disclosure relates to an electrode sheet, a secondary battery and an electronic device.

### Related Art

In the field of new energy power batteries, the application of secondary batteries is becoming more and more widespread, for example, secondary batteries (such as lithium-ion batteries) may be applied to electronic devices such as vehicles, energy storage, mobile phones, tablet computers, wearable devices, mobile power supplies, electronic cigarettes, digital products, electric tools, power devices, energy storage devices, etc. A secondary battery usually includes a housing and an electrode assembly, the electrode assembly includes a positive electrode sheet, a first separator, a negative electrode sheet and a second separator, which are stacked sequentially to form a wound electrode assembly or a laminated electrode assembly, and then packaged in the housing.

However, during the production process of the tab, particularly in the die-cutting (or laser cutting) and winding processes, the phenomenon of folding over is prone to occur.

### SUMMARY

### Technical problem

The disclosure provides an electrode sheet, a secondary battery and an electronic device, so as to at least strengthen supporting force for a tab.

### Solution to Problem

The disclosure provides an electrode sheet, including: an electrode sheet body, and a tab protruding from the electrode sheet body in a first direction, the tab is disposed with a reinforcing rib array, the reinforcing rib array includes multiple first reinforcing ribs; in the first direction, every two adjoining first reinforcing ribs are separated from each other.

In some embodiments, a minimum spacing between the two adjoining first reinforcing ribs in the first direction is **a,** the tab has a height **h** in the first direction, a ratio of the minimum spacing **a** to the height **h** is in a range of 0.08 to 0.5.

In some embodiments, the first reinforcing rib has at least one first bending portion, an inner angle of the first bending portion faces toward the electrode sheet body, in the first direction, the first bending portions of every two adjoining first reinforcing ribs are aligned in the first direction and separated according to the minimum spacing **a.**

In some embodiments, the ratio of the minimum spacing **a** to the height **h** is in a range of 0.15 to 0.35.

In some embodiments, a ratio of the minimum spacing **a** to a thickness of the tab is in a range of 200 to 4000.

In some embodiments, in a direction perpendicular to an extension path of the first reinforcing rib, a maximum width of a single first reinforcing rib is **y,** a ratio of the maximum width y to the minimum spacing **a** is in a range of 0.05 to 0.5.

In some embodiments, each of the first reinforcing ribs has: first bending portions and second bending portions alternately distributed in a second direction, an inner angle of the first bending portion faces toward the electrode sheet body, an inner angle of the second bending portion faces away from the electrode sheet body, and a connecting portion connecting the second bending portion and the first bending portion. The second direction is perpendicular to the first direction. The second bending portion and the first bending portion are arc transitions, a maximum width of the arc transition in a radius direction is **y1,** a width of the connecting portion perpendicular to an extension direction of the connecting portion is **y2,** a ratio of the maximum width **y1** to the width **y2** is in a range of 1.2 to 2.5.

In some embodiments, a spacing between vertices of two adjoining first bending portions of a single strip of the first reinforcing rib is **b,** wherein in the second direction, the tab has a maximum width **c1** and a minimum width **c2,** wherein a ratio of the maximum width **c1** to the spacing **b** is in a range of 1.5 to 3, and/or, a ratio of the minimum width **c2** to the spacing **b** is in a range of 1.5 to 3.

In some embodiments, a second reinforcing rib is filled in an area enclosed by the first reinforcing ribs disposed on two sides or one side edge of the tab in the first direction among the first reinforcing ribs and the edge of the tab, a shape and/or dimension of the second reinforcing rib is different from the first reinforcing rib.

In some embodiments, the first reinforcing rib has a portion conformal with the second reinforcing rib, wherein a dimension of the conformal portion is the same as or different from the second reinforcing rib.

In some embodiments, a minimum spacing in the first direction between the conformal portion in the first reinforcing rib adjoining the second reinforcing rib and the second reinforcing rib is **a,**
a minimum spacing in the first direction between any two adjoining first reinforcing ribs in the first direction in the reinforcing rib array is the minimum spacing **a.**

In some embodiments, in the first direction, each of the first reinforcing ribs comprises a nearest end approaching the electrode sheet body and a farthest end distancing from the electrode sheet body; wherein a distance between the farthest end of the first reinforcing rib approaching the electrode sheet body among two adjoining first reinforcing ribs and the electrode sheet body is **d1,** a distance between the nearest end of the first reinforcing rib distancing from the electrode sheet body and the electrode sheet body is **d2,** the distance **d1** is greater than the distance **d2.**

In some embodiments, there is no intersection between each first reinforcing rib in the reinforcing rib array.

In some embodiments, the first reinforcing rib is a strip-shaped groove or a plurality of triangular grooves connected together.

Embodiments of this application also provide a secondary battery, including the electrode sheet according to any one of the above.

Embodiments of this application also provide an electronic device, including the secondary battery of any one of the above.

### Technical effect

The tab of the embodiments of this application is disposed with a reinforcing rib array, the reinforcing rib array includes multiple first reinforcing ribs, in the first direction, every two adjoining first reinforcing ribs are separated from each other, which strengthens the supporting force for the tab and reduces the risk of the tab folding over.

### BRIEF DESCRIPTION OF THE DRAWINGS

In order to more clearly explain the technical solutions in the embodiments of this application or the prior art, the following will briefly introduce the drawings required to be used in the description of the embodiments or the prior art. Obviously, the drawings in the following description are some embodiments of this application. For those of ordinary skill in the art, other drawings may also be obtained according to these drawings without creative effort.
FIG. 1 shows a schematic diagram of an electronic device with a vehicle as an example.
FIG. 2 shows a perspective schematic diagram of a secondary battery according to an embodiment of this application.
FIG. 3 shows a cross-sectional schematic diagram of a secondary battery according to an embodiment of this application.
FIG. 4 shows a perspective schematic diagram of a secondary battery with a prismatic battery as an example according to another embodiment of this application.
FIG. 5 shows a schematic diagram of an electrode sheet according to an embodiment of this application.
FIG. 6A shows a schematic diagram of a tab according to an embodiment of this application.
FIG. 6B shows a schematic diagram of a tab according to another embodiment of this application.
FIG. 7 shows a schematic diagram of a single strip of first reinforcing rib according to an embodiment of this application.
FIG. 8 shows a schematic diagram of a tab according to another embodiment of this application.
FIG. 9A to FIG. 9C show schematic diagrams of patterns of first reinforcing ribs according to some embodiments of this application.
FIG. 10A to FIG. 10B show schematic diagrams of patterns of first reinforcing ribs according to some embodiments of this application.
FIG. 11A to FIG. 12B show schematic diagrams of patterns of first reinforcing ribs according to some embodiments of this application.
FIG. 13A to FIG. 13B show schematic diagrams of patterns of first reinforcing ribs according to some embodiments of this application.

### DESCRIPTION OF THE EMBODIMENTS

For better understanding the spirit of the embodiments of this application, the following further explains them in conjunction with some preferred embodiments of this application.

The embodiments of this application will be described in detail below. Throughout the specification of this application, the same or similar components and components having the same or similar functions are denoted by similar reference numerals. The embodiments relating to the accompanying drawings described herein are illustrative, diagrammatic, and used for providing a basic understanding of this application. The embodiments of this application should not be construed as limitations to this application.

As used herein, the terms "approximately", "generally", "substantially" and "about" are used to describe and explain small variations. When used in conjunction with an event or circumstance, the terms may refer to instances in which the event or circumstance occurs precisely as well as instances in which the event or circumstance occurs in close approximation.

In this specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom" and their derivative terms (such as "horizontally", "downwardly", "upwardly", etc.) should be construed as referring to the direction described in the discussion or shown in the accompanying drawings. These relative terms are only used for convenience of description and do not require this application to be constructed or operated in a particular direction.

For convenience of description, "first", "second", "third", etc. may be used herein to distinguish different components of a drawing or a series of drawings. "First", "second", "third", etc. are not intended to describe corresponding components.

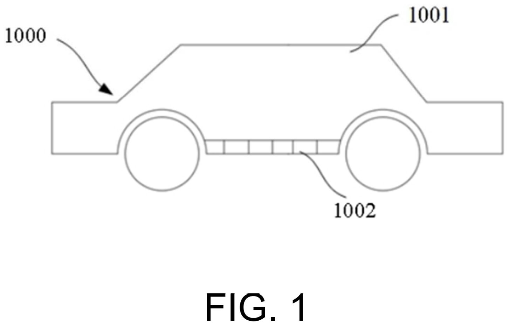

FIG. 1 shows a schematic diagram of an electronic device with a vehicle 1000 as an example. Referring to FIG. 1, for convenience of explanation, the following embodiments are explained by taking the electronic device as the vehicle 1000 as an example. However, it is not difficult to understand that the electronic device provided by this application is not limited to a vehicle, and the electronic device may be a vehicle, a mobile phone, a portable device, a laptop computer, a ship, a spacecraft, an electric toy, an electric tool, etc.

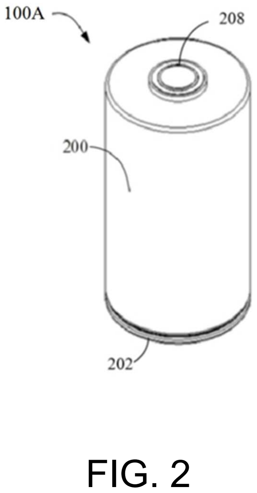

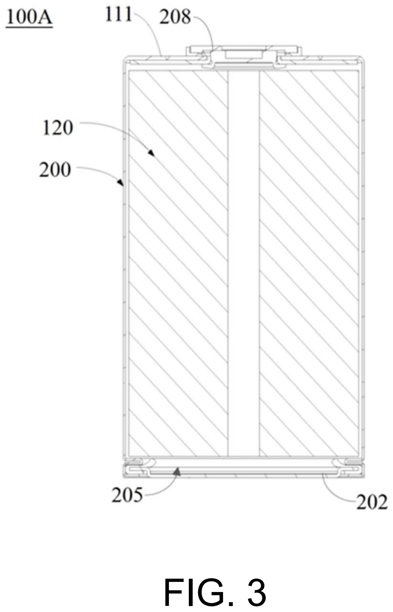

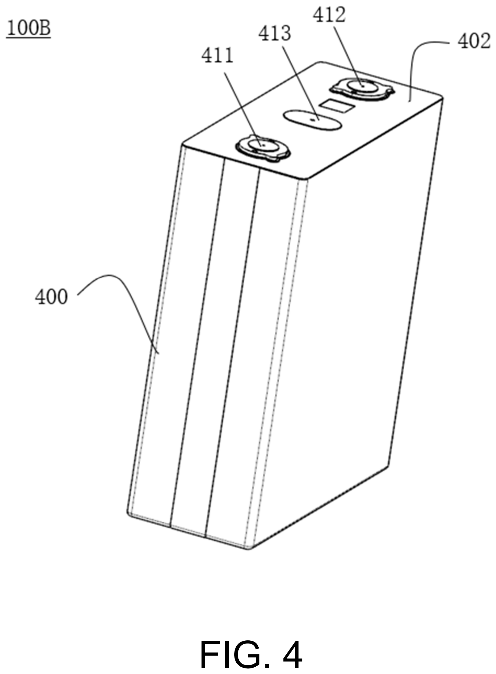

A battery pack 1002 may be set inside the vehicle 1000, and the battery pack 1002 may be set at the bottom (as shown in FIG. 1) or the head, or the tail, or any other appropriate position of the vehicle body 1001. The battery pack 1002 may be used for power supply of the vehicle 1000, for example, the battery pack 1002 may serve as an operating power source or a driving power source of the vehicle 1000. The battery pack 1002 may include multiple secondary batteries (such as a secondary battery 100A described with respect to FIG. 2 and FIG. 3 or a secondary battery 100B described with respect to FIG. 4) and a case assembly for accommodating the secondary batteries.

It should be understood that the secondary battery in this application may be a secondary battery of various shapes, for example, it may be cylindrical, flat, rectangular parallelepiped or other shapes, etc., and the embodiments of this application do not limit this. On the other hand, the secondary battery in this application may be a lithium-ion battery, a lithium-sulfur battery, a sodium-lithium-ion battery, a sodium-ion battery, etc., and the embodiments of this application do not limit this either.

FIG. 2 shows a perspective schematic diagram of a secondary battery 100A according to an embodiment of this application. In the embodiment shown in FIG. 2, the secondary battery 100A is shown as a cylindrical battery as an example. FIG. 3 shows a cross-sectional schematic diagram of a secondary battery 100A according to an embodiment of this application. As shown in combination with FIG. 2 and FIG. 3, the secondary battery 100A may include an electrode assembly 120, an electrolyte, a housing 200 and an end cap 202. One end of the housing 200 along the height direction may have an opening 205, and the end cap 202 is set at the opening 205 and blocks the accommodating cavity. The housing 200 and the end cap 202 are components that jointly accommodate the electrode assembly 120 and the electrolyte. The material of the housing 200 may be any of a variety of available materials, such as copper, iron, aluminum, steel, aluminum alloy, etc. The housing 200 may be cylindrical and define an accommodating cavity, and the electrode assembly 120 is set in the accommodating cavity. The diameter of the housing 200 may be determined according to the specific dimension of the electrode assembly 120, such as 18 mm, 21 mm, 46 mm, etc. In some embodiments, the secondary battery 100A may be a 4680 cylindrical battery (diameter 46 mm, height 80 mm), the secondary battery 100A may be a 4695 cylindrical battery (diameter 46 mm, height 95 mm), or the secondary battery 100A may be a 46120 cylindrical battery (diameter 46 mm, height 120 mm).

The housing 200 may be connected to the negative electrode of the electrode assembly 120. The secondary battery 100A may also have an electrode terminal 208 at one end opposite to the end cap 202, and the electrode terminal 208 may be connected to the positive electrode of the electrode assembly 120. It should be understood that the electrode terminal 208 and the housing 200 are in an insulating fit state to avoid battery short circuit.

In some embodiments, the electrode assembly 120 may include a first electrode sheet, a first separator, a second electrode sheet and a second separator stacked in sequence. In this embodiment, the stacked first electrode sheet, first separator, second electrode sheet and second separator may be wound to form a cylindrical electrode assembly 120. The electrode assembly 120 is provided with a first tab and a second tab at two ends in a height direction h of the secondary battery 100 respectively. The electrolyte may be located between the first electrode sheet, the first separator, the second electrode sheet and the second separator. In some embodiments, the first electrode sheet is a positive electrode sheet, and the second electrode sheet is a negative electrode sheet. In some embodiments, the positive tab faces an end wall 111 and is electrically connected to the electrode terminal 208 so that the electrode terminal 208 is positively charged; the negative tab faces the opening 205, and the housing 200 is electrically connected to the negative tab so as to be negatively charged.

FIG. 4 shows a perspective schematic diagram of a secondary battery 100B with a prismatic battery as an example according to another embodiment of this application. In FIG. 4, the secondary battery 100B is a prismatic battery. As shown in combination with FIG. 2 and FIG. 3, the secondary battery 100B may include a housing 400 and a cover plate assembly 402. The housing 400 may be in a flat rectangular shape. One end of the housing 400 along the height direction may have an opening (not shown), and the cover plate assembly 402 is set at the opening. The cover plate assembly 402 is provided with a first electrode terminal 411, a second electrode terminal 412 and an explosion-proof valve 413. In some embodiments, the first electrode terminal 411 and the second electrode terminal 412 are used as a positive electrode terminal and a negative electrode terminal respectively.

The positive electrode sheet in the secondary battery (such as the secondary battery 100A, 100B) may include a positive electrode current collector and a positive electrode active material layer coated on both side surfaces of the positive electrode current collector. The portion of the positive electrode current collector not coated with the positive electrode active material layer constitutes the positive tab. The negative electrode sheet may include a negative electrode current collector and a negative electrode active material layer coated on both side surfaces of the negative electrode current collector. The portion of the negative electrode current collector not coated with the negative electrode active material layer constitutes the negative tab. Taking a lithium-ion battery as an example, the material of the positive electrode current collector may be aluminum, the positive electrode active material layer may include a positive electrode active material, and the positive electrode active material may be lithium cobalt oxide, lithium iron phosphate, ternary lithium or lithium manganese oxide, etc. The material of the negative electrode current collector may be copper, the negative electrode active material layer may include a negative electrode active material, and the negative electrode active material may be carbon or silicon, etc. In some embodiments, the material of the first separator and the second separator may be, for example, PP (polypropylene) or PE (polyethylene), etc.

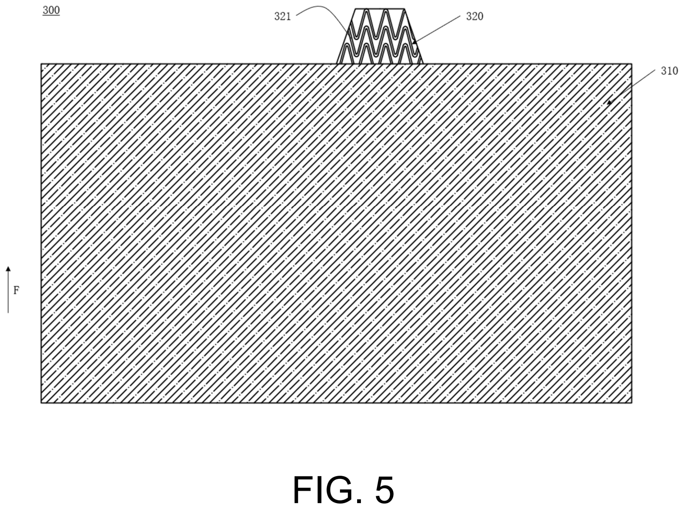

FIG. 5 shows a schematic diagram of an electrode sheet 300 according to an embodiment of this application. The electrode sheet 300 includes an electrode sheet body 310 and a tab 320 protruding from the electrode sheet body 310 along a first direction F, and the tab 320 is provided with a reinforcing rib array 321. In some embodiments, the reinforcing rib array 321 is set on the surface of the tab 320. The reinforcing rib array 321 includes multiple first reinforcing ribs 322, and along the first direction F, every two adjoining first reinforcing ribs 322 are separated from each other. It may be understood as follows, the formation of the first reinforcing ribs involved in this application may be implemented by rolling or stamping, etc., for example, the tab is rolled by an embossing roller with convex ribs set on the surface, so that grooves are left on the tab to form the first reinforcing ribs, but it is not limited thereto. In some embodiments, the first reinforcing rib 322 is a continuous groove formed on the surface of the tab 320, the texture formed by the extension path of the first reinforcing rib 322 may be in a regular pattern, a single strip of the first reinforcing rib 322 has no interruption in the area of the tab 320, and an array formed by multiple single strips of the first reinforcing ribs 322 according to a certain rule is the reinforcing rib array 321. The tab 320 may be the positive tab or the negative tab as described above.

Generally speaking, for the prior art, before forming an electrode sheet having a tab, an active material layer is coated on partial areas of both front and back sides of the electrode sheet to form a coating area, and for an uncoated area that is not coated with the active material layer, it is generally located in the wide edge area of the electrode sheet. After coating the active material layer, the uncoated area is cut or laser cut to form the tab of the electrode sheet, and then the electrode sheet already having the tab is wound up, and this process may be called winding. However, during the winding process, since the tab of the electrode sheet is generally a thin foil, the material of the tab is soft and easy to bend. During the winding process, the tab may fold toward the coating area coated with the active material layer and be wound into the wound electrode sheet body, and is not exposed relative to the electrode sheet body, and it is very likely that the tab folds and inserts into the winding core to overlap with the electrode sheet body, forming a defect. Moreover, in a secondary battery, since the tab undertakes the function of transferring current, the folded tab will subsequently enter the inside of the secondary battery with the processing process, and the current cannot flow out from the folded tab, resulting in an increase in internal resistance. More seriously, the folded tab inserted into the winding core may cause a short circuit by conducting the positive and negative electrodes, affecting the safety performance of the battery. In this condition, before the tab 320 of the electrode sheet 300 is formed, the first reinforcing ribs 322 are formed on the surface of the tab 320 to strengthen the support for the tab 320. However, generally speaking, the reinforcing ribs rolled on the tab in the prior art are generally only a single strip, and there are many blank areas without reinforcing ribs on the tab. According to the electrode sheet 300 of the embodiment of this application, by setting a reinforcing rib array 321 having multiple first reinforcing ribs 322 on the tab 320, and along the first direction F, separating two adjoining first reinforcing ribs 322 from each other, the surface of the tab 320 is covered with more first reinforcing ribs 322 as much as possible, forming a dense reinforcing rib array 321 to obtain a stronger support effect for the tab 320.

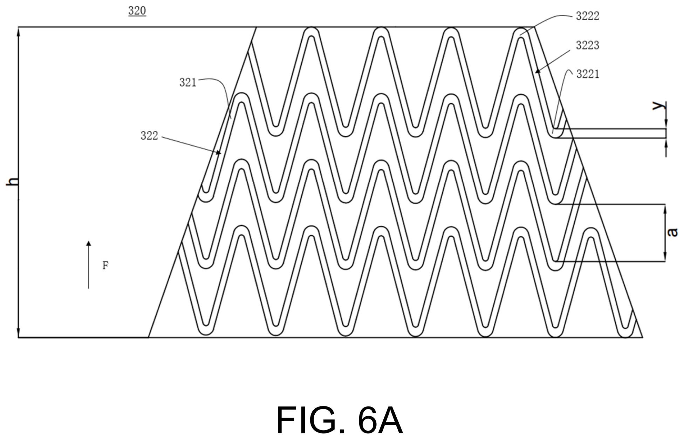

FIG. 6A shows a schematic diagram of a tab 320 according to an embodiment of this application. The texture formed by the extension path of the first reinforcing rib 322 may have a variety of shapes, and preferably, the first reinforcing rib 322 may be a W-shaped reinforcing rib with a W-shaped texture, and further, every two adjoining first reinforcing ribs 322 in the reinforcing rib array 321 may be W-shaped reinforcing ribs. It may be understood that, in some embodiments, each first reinforcing rib 322 has: at least one second bending portion 3221 and at least one first bending portion 3222 alternately distributed along the second direction, along the first direction F, the inner angle of the second bending portion 3221 faces away from the electrode sheet body 310, the inner angle of the first bending portion 3222 faces toward the electrode sheet body 310, and the second direction is perpendicular to the first direction. In other embodiments, it may be understood that the first reinforcing rib 322 presents a V-shape, and the first reinforcing rib 322 may be a single V-shape or an entire continuous reinforcing rib formed by connecting multiple V-shapes. Preferably, the V-shaped inner angle of the first reinforcing rib 322 faces the electrode sheet body 310 rather than the V-shaped inner angle of the first reinforcing rib 322 facing away from the electrode sheet body, this is because when the first reinforcing ribs 322 in the reinforcing rib array 321 are too loose, having the V-shaped inner angle of the first reinforcing rib 322 facing the electrode sheet body 310 achieves a better improvement effect on the support for the tab 320 compared to having the V-shaped inner angle of the first reinforcing rib 322 facing away from the electrode sheet body 310. However, in some embodiments, when the number of first reinforcing ribs 322 in the reinforcing rib array 321 is greater and has a higher density of first reinforcing ribs 322, at this time if the V-shaped inner angle of the first reinforcing rib 322 is set in a direction facing away from the electrode sheet body 310, the strengthening effect of the first reinforcing rib 322 on the tab 320 under this setting is also sufficient. It may also be understood that, in some embodiments, the first reinforcing rib 322 has a second bending portion 3221 protruding away from the first direction F, and has a first bending portion 3222 adjoining the second bending portion 3221 and protruding along the first direction F, and a connecting portion 3223 connecting the second bending portion 3221 and the first bending portion 3222. In other embodiments, the first bending portion 3222 and the second bending portion 3221 have a concave side facing toward the bending direction of the first bending portion 3222 and the second bending portion 3221 themselves, and a convex side facing away from the bending direction of the first bending portion 3222 and the second bending portion 3221 themselves, and the second bending portion 3221 and the first bending portion 3222 are alternately arranged in the second direction, the concave side of the second bending portion 3221 faces away from the electrode sheet body 310, and the concave side of the first bending portion 3222 faces toward the electrode sheet body 310.

It may be understood that the connecting portion 3223 is a smooth segment connecting the second bending portion 3221 and the first bending portion 3222. In some embodiments, the connecting portion 3223 may be a straight portion connecting the second bending portion 3221 and the first bending portion 3222, or may be an arc portion having a certain curvature. Preferably, by forming such W-shaped reinforcing ribs, multiple dense triangular support structures are formed on the tab 320, further strengthening the support for the tab 320.

In some embodiments, in order to control the density of the reinforcing rib array 321, the minimum spacing between two adjacent first reinforcing ribs 322 separated in the first direction F is a, the tab 320 has a height h along the first direction F, and the ratio of a to the height h of the tab 320 along the first direction F is in the range of 0.08 to 0.5. If the ratio is too high, higher than 0.5, the reinforcing rib array 321 is loose, and the strengthening effect is reduced; if the ratio is too small, smaller than 0.08, the reinforcing rib array 321 is too dense, and it is easy to cause excessive stress to damage the tab 320 when forming the first reinforcing ribs 322 by rolling. Preferably, the ratio is in the range of 0.15 to 0.35, which may better balance the strengthening effect of the tab 320 and reduce the stress during rolling. In some embodiments, the second bending portions 3221 of every two adjacent first reinforcing ribs 322 are aligned in the first direction F and the minimum spacing separated is a, that is, the minimum spacing between two adjacent first reinforcing ribs 322 in the first direction F is the minimum spacing a between the second bending portions 3221 of two adjacent first reinforcing ribs 322. In some embodiments, the second bending portions 3221 and/or the first bending portions 3222 of every two adjacent first reinforcing ribs 322 are not aligned in the first direction F, and at this time the minimum spacing separated between two adjacent first reinforcing ribs 322 along the first direction F is a. In some embodiments, along the first direction F, the distance from each point on a single first reinforcing rib 322 to the nearest point on another first reinforcing rib 322 adjacent to this first reinforcing rib 322 is equal, and at this time the distance is defined as a. In other embodiments, similarly, the first bending portions 3222 of every two adjacent first reinforcing ribs 322 are aligned in the first direction F and the minimum spacing separated is a.

In some embodiments, the ratio of a to the thickness of the tab 320 is in the range of 200 to 4000. It may be understood that in some embodiments, the active material layers located on both sides of the electrode sheet body 310 may extend to the surface of the tab 320; however, at this time the thickness of the tab 320 does not include the thickness of the active material layers that may extend to both sides of the tab 320, but only includes the thickness of the foil of the tab 320. It may be understood that for a tab 320 of a certain thickness, although a relatively dense reinforcing rib array 321 may achieve a better strengthening effect, it is easy to damage the tab 320, causing the tab 320 to crack. For example, when the ratio of a to the thickness of the tab 320 is smaller than 200, it indicates that the minimum spacing a is set too small and the thickness of the tab 320 is set too large, and the dense first reinforcing ribs are easy to cause the tab 320 to fracture; for another example, when the ratio of a to the thickness of the tab 320 is greater than 4000, it indicates that the minimum spacing a is set too large and the thickness of the tab 320 is set too small, and the sparse first reinforcing ribs make the strengthening effect of the tab 320 limited, which is insufficient to alleviate or solve the problem of the tab 320 folding over.

In some embodiments, the first reinforcing rib 322 is wholly or partially a W-shaped reinforcing rib. The first reinforcing rib 322 being partially a W-shaped reinforcing rib may be a wavy first reinforcing rib 322 formed by connecting one or more W-shaped reinforcing ribs.

Furthermore, every two adjacent first reinforcing ribs 322 may be W-shaped reinforcing ribs of the same shape and dimension, or may be W-shaped reinforcing ribs of different shapes and dimensions. In some embodiments, when every two adjacent first reinforcing ribs 322 in the reinforcing rib array 321 are W-shaped reinforcing ribs of the same shape and dimension, in the direction perpendicular to the extension path of the first reinforcing rib 322, the maximum width of a single first reinforcing rib 322 is y, and the ratio of y to a is in the range of 0.05 to 0.5. For example, FIG. 6A shows that the maximum width y of a single first reinforcing rib 322 is the width of the second bending portion 3221 perpendicular to its extension path. Correspondingly, in some embodiments, the maximum width y of a single first reinforcing rib 322 may be the width of the first bending portion 3222 perpendicular to its extension path.

In an example of a W-shaped reinforcing rib, every two adjacent connecting portions 3223 in the first reinforcing rib 322 are connected through a transition portion, wherein the width of the transition portion in the direction perpendicular to its extension path is the maximum width of a single first reinforcing rib 322 and is wider than the width of the connecting portion 3223, so as to avoid the problem that wrinkles are easy to occur in the area between the upper and lower adjacent first reinforcing ribs 322.

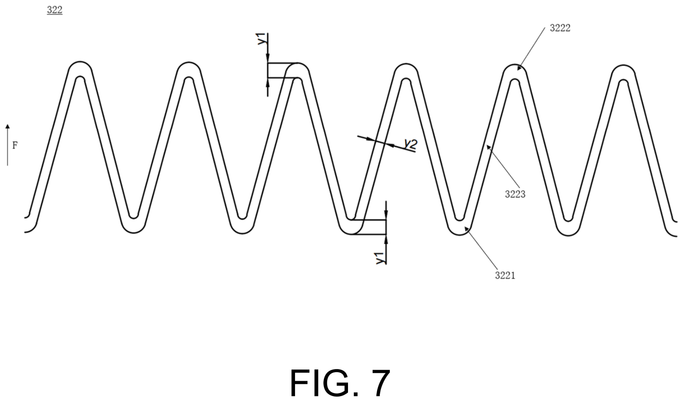

Obviously, it may be understood that, in terms of shape, at this time the transition portion is the second bending portion 3221 and the first bending portion 3222 of the first reinforcing rib 322. In addition, the condition where the transition portion is an arc transition will be further described in FIG. 7. It may be understood that if the ratio is too small, it indicates that the maximum width y of a single first reinforcing rib 322 is set relatively small compared to the minimum spacing a, smaller than 0.05, and the strengthening strength is insufficient; if the ratio is too large, it indicates that the maximum width y of a single first reinforcing rib 322 is set relatively large compared to the minimum spacing a, greater than 0.5, and it is easy to damage the tab 320.

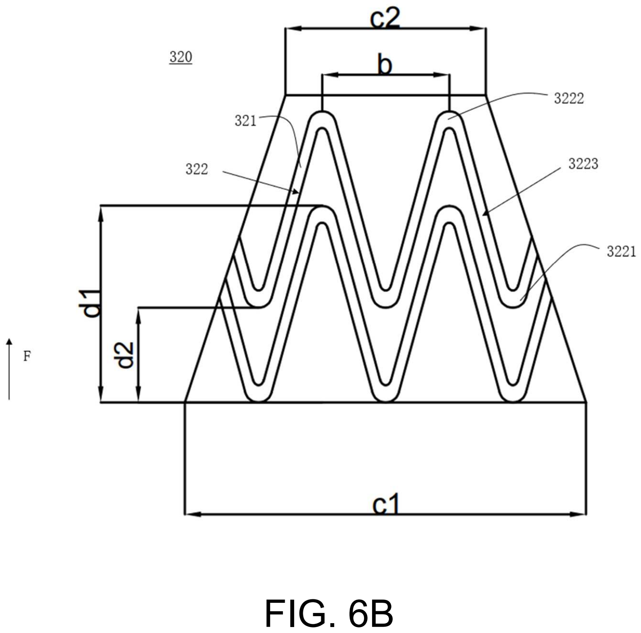

FIG. 6B shows a schematic diagram of a tab 320 according to another embodiment of this application. In some embodiments, the spacing between the vertices of two adjacent first bending portions 3222 of a single first reinforcing rib 322 along the first direction distancing from the electrode sheet body 310 is b, in the width direction of the tab 320 perpendicular to the first direction F (that is, the second direction as described above), the tab 320 has a maximum width c1 and a minimum width c2, the ratio of c1 to b is in the range of 1.5 to 3, and the ratio of c2 to b is in the range of 1.5 to 3. When the ratio is greater than 1.5, it may ensure that a reinforcing rib array 321 having at least one W-shaped first reinforcing rib 322 is formed on the tab 320 after rolling, so as to ensure the strengthening effect; however, if the ratio is too large, for example greater than 3, the reinforcing rib array 321 formed at this time is too dense, and it is easy to damage the tab 320.

FIG. 7 shows a schematic diagram of a single strip of first reinforcing rib 322 according to an embodiment of this application. In some embodiments, the second bending portion 3221 and the first bending portion 3222 are arc transitions, and the maximum width of the arc transition in the radial direction is y1 (at this time y1 is the maximum width y of a single first reinforcing rib 322), the width of the connecting portion 3223 perpendicular to the extension direction of the connecting portion 3223 is y2, and the ratio of y1 to y2 is in the range of 1.2 to 2.5. It may also be understood that, in some embodiments, when the second bending portion 3221 and the first bending portion 3222 are arc transitions, at this time the inner angle of the second bending portion 3221 and the first bending portion 3222 may be the angle between the tangent lines at the two end points of the arc segment. In some embodiments, the second bending portion 3221 and the first bending portion 3222 have an arc segment and two straight line segments respectively connecting the two ends of the arc segment, at this time the inner angle of the second bending portion 3221 and the first bending portion 3222 may be the angle between the above two straight line segments. Meanwhile, it may be understood that if the ratio of y1 to y2 is lower than the lower limit value 1.2, it is difficult to form a smooth fillet with arc transition, and when forming the first reinforcing rib 322, for example, when forming the first reinforcing rib 322 by rolling, it is easy to damage the tab 320; if the ratio is higher than the upper limit value 2.5, wrinkles are easy to occur in the area between adjacent first reinforcing ribs 322 during the rolling process, for example, wrinkles are easy to occur in the multiple semi-enclosed triangular areas formed by the first reinforcing rib 322 shown in FIG. 7, which is not conducive to the subsequent welding of the tab 320.

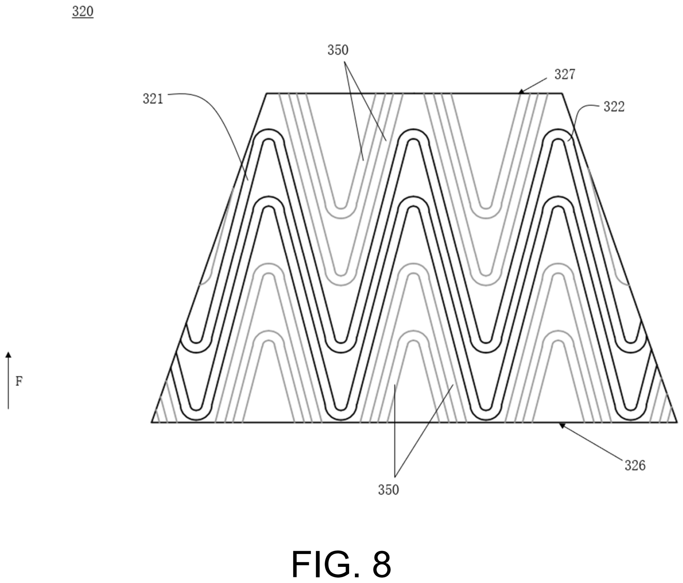

FIG. 8 shows a schematic diagram of a tab 320 according to another embodiment of this application. In some embodiments, among the multiple first reinforcing ribs 322, the area enclosed by the first reinforcing ribs 322 set on both sides or one side edge of the tab along the first direction F and the edge of the tab is filled with second reinforcing ribs 350, and the shape and/or dimension of the second reinforcing ribs 350 is different from that of the first reinforcing ribs 322. As an example, in some embodiments, along the first direction F, the edges located on both sides of the tab include a lower edge 326 adjoining the electrode sheet body 310, and an upper edge 327. Along the first direction F, the area enclosed by the first reinforcing ribs 322 set on both sides or one side edge (lower edge 326 and/or upper edge 327) of the tab 320 (which may also be understood as one first reinforcing rib 322 closest to the lower edge 326 in the reinforcing rib array 321 and one first reinforcing rib 322 closest to the upper edge 327 in the reinforcing rib array 321) has second reinforcing ribs 350 filled in the area (for ease of understanding, the second reinforcing ribs 350 are shown in a lighter color in FIG. 8). By forming second reinforcing ribs 350 between the area enclosed by the two first reinforcing ribs 322 closest to the lower edge 326 and the upper edge 327 of the reinforcing rib array 321 and the edges of the tab 320 (for example, the upper edge 326 and the lower edge 327, however, in some embodiments, along the second direction perpendicular to the first direction F, second reinforcing ribs 350 may also be set in the area enclosed between the two first reinforcing ribs 322 closest to the lower edge 326 and the upper edge 327 of the reinforcing rib array 321 and the two side edges of the tab 320), the area on the tab 320 not covered by the first reinforcing ribs 322 is further filled, avoiding stress junction points in the area where the first reinforcing ribs 322 are not formed, and further strengthening the supporting force for the tab 320 to reduce the possibility of the tab 320 bending. It may be understood that, in some embodiments, the second reinforcing ribs 350 filled in the area enclosed between one first reinforcing rib 322 closest to the lower edge 326 and the lower edge 326 have a better strengthening effect on the tab 320 compared to the second reinforcing ribs 350 filled in the area enclosed between one first reinforcing rib 322 closest to the upper edge 327 and the upper edge 327, and comparatively may better strengthen the strength of the root area where the tab 320 connects with the tab body 310, and have a stronger effect of additional supporting force on the tab 320. It may be understood that, in some embodiments, the shape and/or dimension of the second reinforcing ribs 350 is the same as a portion of the first reinforcing ribs 322, and/or the shape and/or dimension of the second reinforcing ribs 350 is different from that of the first reinforcing ribs 322. It may also be understood from another perspective that, in some embodiments, the second reinforcing ribs 350 are a portion of the first reinforcing ribs 322 that are cut off laterally by the lower edge 326 and the upper edge 327 of the tab 320 and have the same shape and/or dimension as a single first reinforcing rib 322. In some embodiments, the second reinforcing ribs 350 have the same shape as a single first reinforcing rib 322 but have different dimensions, for example, the second reinforcing ribs 350 may be a complete single w-shaped reinforcing rib, a continuous reinforcing rib composed of complete continuous multiple w-shapes and having a dimension smaller than that of a single first reinforcing rib 322. In some embodiments, the second reinforcing ribs 350 have the same shape as a portion of a single first reinforcing rib 322, but the dimension of the second reinforcing ribs 350 is larger or smaller than the dimension of that portion of a single first reinforcing rib 322. As mentioned above, the shape of the second reinforcing ribs 350 being the same as a portion of a single first reinforcing rib 322 may be understood as the second reinforcing ribs 350 being conformal with a portion of a single first reinforcing rib 322. Generally speaking, the shape contour of the second reinforcing ribs 350 may be scaled or not scaled to coincide with a portion of the shape contour of a single first reinforcing rib 322, and having the same shape contour without being limited to dimension is called "conformal". In specific implementation, for example, when the first reinforcing ribs 322 and the second reinforcing ribs 350 are formed by rolling the tab 320 with an embossing roller provided with convex ribs, the pattern on the embossing roller corresponding to the second reinforcing ribs 350, in terms of shape, may actually be any segment cut from the pattern corresponding to the first reinforcing ribs 322. For example, the pattern corresponding to the first reinforcing ribs 322 is a W-shaped continuous pattern, and the pattern corresponding to the second reinforcing ribs 350 may be, for example, a V-shape or an inverted V-shape of any segment cut from the W-shaped continuous pattern. In some other embodiments, the embossing roller may have only a single continuous convex rib corresponding to the shape of a single first reinforcing rib 322, for example, the embossing roller forms the bottommost first reinforcing rib 322 in FIG. 8 on the tab 320; translates upward along the first direction F shown in FIG. 8, and then forms the second first reinforcing rib 322 counting from bottom to top in FIG. 8; continuing to repeat this step, since the convex rib on the embossing roller exceeds the upper edge 327 of the tab 320, the second reinforcing ribs 350 cut off by the upper edge are obtained. In some other embodiments, the pattern formed by the extension path of the second reinforcing ribs 350 may be reasonable shapes such as w-shape, annular shape, dot shape, semicircular arc, circular shape, triangular shape, etc.

In some embodiments, the texture formed by the extension path of the second reinforcing ribs 350 is the same as a portion of the first reinforcing ribs 322 in the reinforcing rib array 321, the minimum spacing between the second reinforcing ribs 350 and the first reinforcing ribs 322 in the first direction F is a, and the minimum spacing between two adjacent first reinforcing ribs 322 in the first direction F is a, that is, the minimum spacing of both is equal and both are a. It may also be understood as: as described above, the first reinforcing ribs 322 have a portion conformal with the second reinforcing ribs 350 and have the same dimension, the minimum spacing between the conformal portion in the first reinforcing ribs 322 adjacent to the second reinforcing ribs 350 and the second reinforcing ribs 350 in the first direction F is a, and the minimum spacing between any two adjacent first reinforcing ribs 322 in the first direction in the reinforcing rib array in the first direction is also a. It may be understood that, if there are multiple second reinforcing ribs 350 in the area enclosed by the edge first reinforcing ribs and both sides or one side edge of the tab 320, the minimum spacing between the second reinforcing ribs 350 in the first direction F may also be a. By having the same minimum spacing a between the second reinforcing ribs 350 and the first reinforcing ribs 322 in the first direction, and the texture formed by the extension path of the second reinforcing ribs 350 being the same as a portion of the first reinforcing ribs 322 in the reinforcing rib array 321, the force during the forming process of all the first reinforcing ribs on the tab 320 is relatively uniform, avoiding cracking of the tab caused by stress differences between the second reinforcing ribs 350 and the first reinforcing ribs 322 during the forming process.

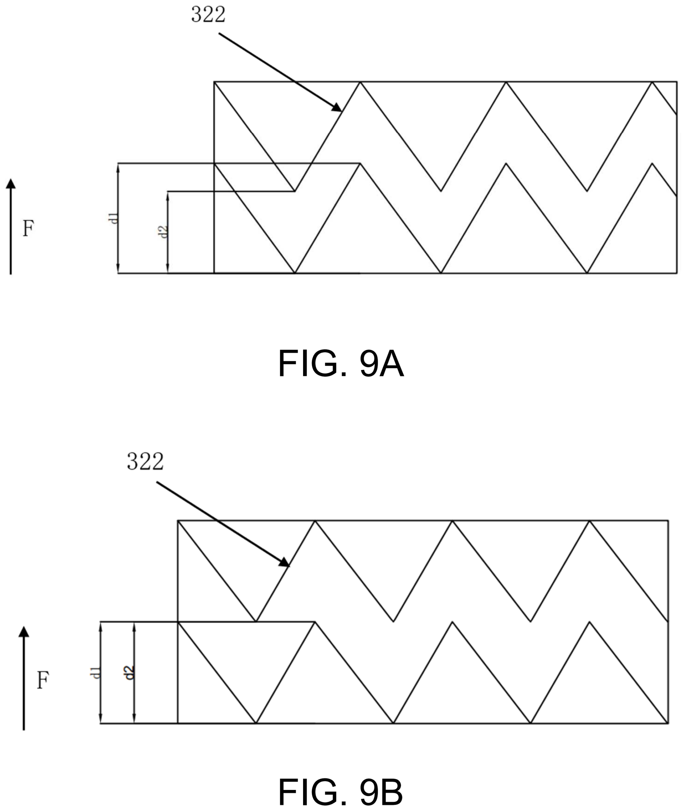

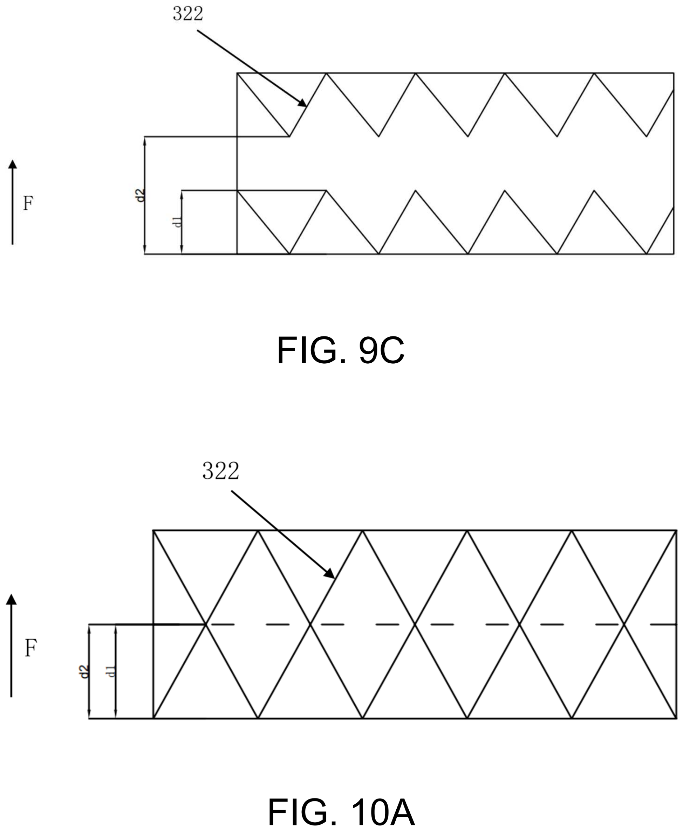

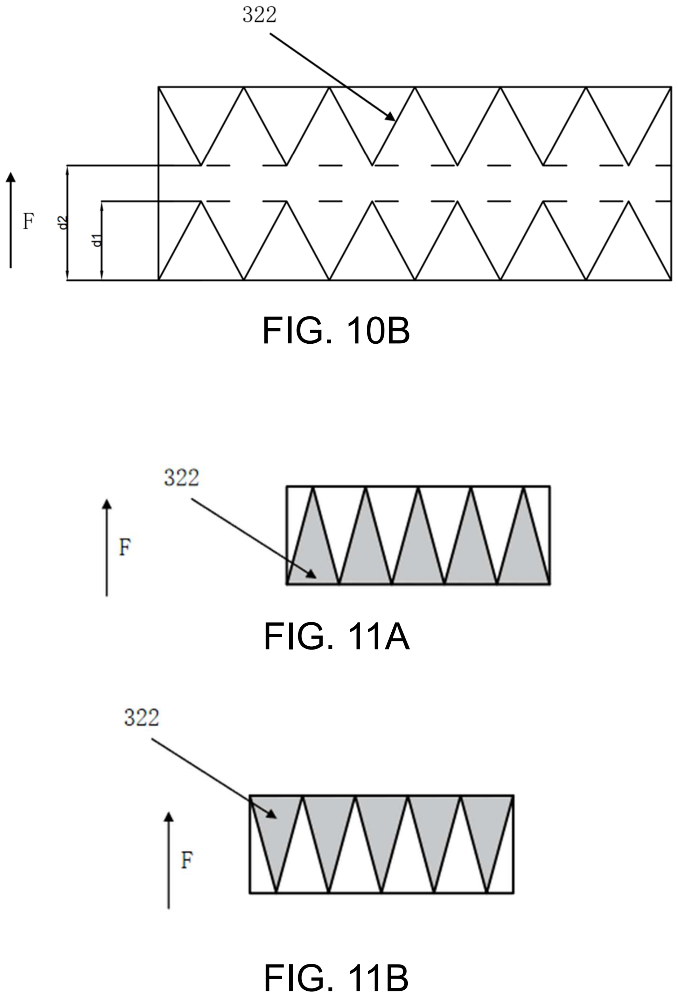

FIG. 9A to FIG. 9C show schematic diagrams of patterns of textures formed by the extension direction of the first reinforcing ribs 322 according to embodiments of this application. Referring to FIG. 9A to FIG. 9C, in some embodiments, the first reinforcing ribs 322 are continuous strip-shaped grooves formed on the surface of the tab 320. Referring to FIG. 9A and FIG. 6B, in some embodiments, along the first direction F, each first reinforcing rib 322 includes a nearest end approaching the electrode sheet body 310 and a farthest end distancing from the electrode sheet body 310; wherein, among two adjacent first reinforcing ribs 322, the distance between the farthest end of the first reinforcing rib 322 approaching the electrode sheet body 310 and the electrode sheet body 310 is d1, and the distance between the nearest end of the first reinforcing rib 322 distancing from the electrode sheet body and the electrode sheet body 310 is d2, d1 is greater than d2. As shown in FIG. 9A, along the first direction F, the lowest point of each first reinforcing rib 322 is lower than the apex of the adjacent first reinforcing rib 322 below. FIG. 9B shows the condition where along the first direction F, the lowest point of each first reinforcing rib 322 is equal to the apex of the adjacent first reinforcing rib 322 below, which may also be understood as the condition where d1 is equal to d2. FIG. 9C shows the condition where along the first direction F, the lowest point of each first reinforcing rib 322 is higher than the apex of the adjacent first reinforcing rib 322 below, which may also be understood as the condition where d1 is less than d2. The conditions shown in FIG. 9B and FIG. 9C are often undesirable and will be further described later. FIG. 10A to FIG. 10B show schematic diagrams of patterns of the first reinforcing ribs 322 according to embodiments of this application. Referring to FIG. 10A to FIG. 10B, the dashed lines in the figures show the reference lines of the farthest end distancing from the electrode sheet body 310 and the nearest end approaching the electrode sheet body 310 of two vertically adjacent first reinforcing ribs 322. When along the first direction F, the nearest end approaching the electrode sheet body 310 of each first reinforcing rib 322 is at the same height as or higher than the farthest end distancing from the electrode sheet body 310 of the adjacent first reinforcing rib 322 below, this is often undesirable. Since there is a condition where the height reference lines of the farthest end distancing from the electrode sheet body 310 and the nearest end approaching the electrode sheet body 310 between two vertically adjacent first reinforcing ribs 322 coincide, or, in some conditions, the farthest end distancing from the electrode sheet body 310 and the nearest end approaching the electrode sheet body 310 between two vertically adjacent first reinforcing ribs 322 are aligned and coincide with each other, there also exists a condition where the farthest end distancing from the electrode sheet body 310 and the nearest end approaching the electrode sheet body 310 between two vertically adjacent first reinforcing ribs 322 are aligned and the nearest end is higher than the farthest end, which may also be understood as the aforementioned condition where d1 is less than or equal to d2. "Aligned" may be understood as the farthest end distancing from the electrode sheet body 310 and the nearest end approaching the electrode sheet body 310 of two vertically adjacent first reinforcing ribs 322 being on the same straight line extending along the first direction F. On one hand, this condition where the nearest end and the farthest end are aligned and coincide with each other will cause, for example, the intersection points of the first reinforcing ribs 322 on the dashed line shown in FIG. 10A to constitute a stress concentration line. As shown in FIG. 10A, when such a pattern where the apex farthest end distancing from the electrode sheet body 310 and the nearest end approaching the electrode sheet body 310 between two vertically adjacent first reinforcing ribs 322 are aligned and coincide with each other is rolled onto the tab 320, it will cause the tab 320 to folding over downward along the dashed line shown in FIG. 10A, which is often undesirable. Generally, in another undesirable condition, as exemplified in FIG. 10B, along the first direction F, when the farthest end distancing from the electrode sheet body 310 and the nearest end approaching the electrode sheet body 310 of two vertically adjacent first reinforcing ribs 322 are aligned, the nearest end approaching the electrode sheet body 310 of each first reinforcing rib 322 is higher than the farthest end distancing from the electrode sheet body 310 of the adjacent first reinforcing rib 322 below. Compared to the condition exemplified in FIG. 10A, although the condition exemplified in FIG. 10B may avoid the condition where intersection points constitute a stress concentration line causing the tab 320 to folding over, however, since the nearest end approaching the electrode sheet body 310 of each first reinforcing rib 322 is higher than the farthest end distancing from the electrode sheet body 310 of the adjacent first reinforcing rib 322 below, some blank areas will appear between two vertically adjacent first reinforcing ribs 322 (which may be understood as areas where no first reinforcing ribs 322 exist), which causes the strengthening effect of the first reinforcing ribs 322 to become weaker in these blank areas. Furthermore, in order to avoid the condition of the tab 320 folding overing as described above, in some embodiments, there are no intersection points among the first reinforcing ribs 322 in the reinforcing rib array 321.

It should be explained that: the above is exemplified by taking the first reinforcing rib 322 as a W-shaped reinforcing rib, in actual implementation, the texture formed by the extension path of the first reinforcing rib 322 may also be any other possible continuous regular pattern, for example, it may be continuous strip-shaped first reinforcing ribs 322 on the surface of the tab 320.

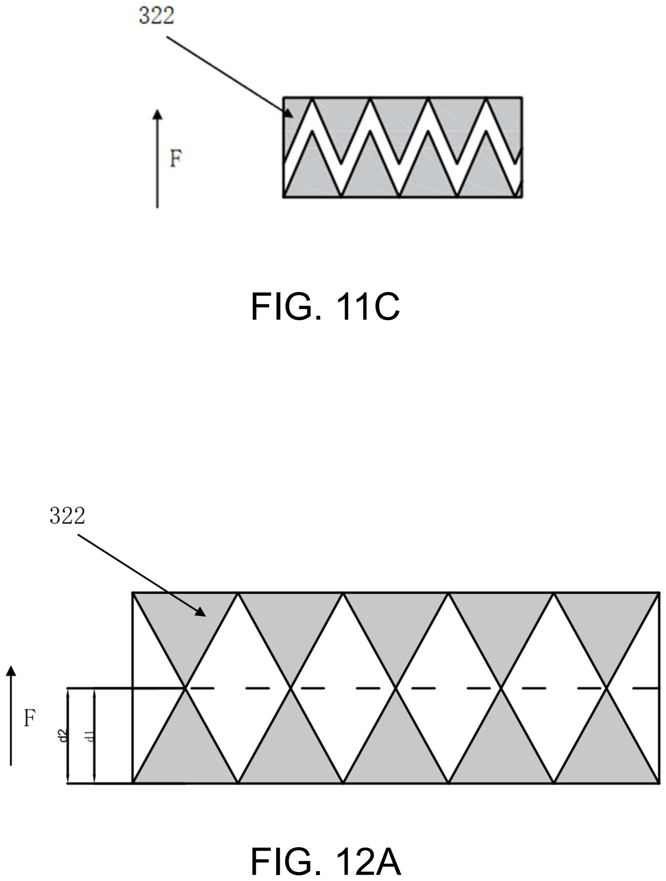

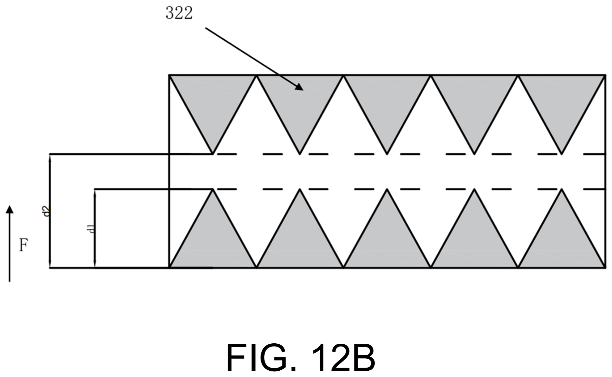

Specifically: FIG. 11A to FIG. 12B show schematic diagrams of patterns of the first reinforcing rib 322 according to embodiments of this application. As exemplified in FIG. 11A to FIG. 12B, in some embodiments, the first reinforcing rib 322 is multiple triangular grooves connected together formed on the surface of the tab 320. Preferably, a transition portion may be set at the connection position between the triangular grooves, the shape of the transition portion may be, for example, an arc-shaped groove, a rectangular groove or any other shaped groove, the setting of the transition portion may refer to, for example, the arc transition shown in FIG. 7, connecting two adjacent corners of two adjacent triangular grooves. It can be seen that FIG. 11A to FIG. 12B show the texture of the first reinforcing rib 322 in the form of multiple triangular areas connected together. Similar to the description for FIG. 10A and 10B, the dashed line shows the reference line along the first direction F of the farthest end away from the electrode sheet body 310 and the nearest end approaching the electrode sheet body 310 of two vertically adjacent first reinforcing ribs 322. Now please refer to FIG. 12A to FIG. 12B, when along the first direction F, the nearest end of each first reinforcing rib 322 approaching the electrode sheet body 310 is at the same height as or higher than the farthest end of the lower adjacent first reinforcing rib 322 away from the electrode sheet body 310, this is often undesirable. Since there is a condition where the height reference line of the farthest end away from the electrode sheet body 310 and the nearest end approaching the electrode sheet body 310 between two vertically adjacent first reinforcing ribs 322 coincides, or it may also be understood as a condition where the farthest end away from the electrode sheet body 310 and the nearest end approaching the electrode sheet body 310 between two vertically adjacent first reinforcing ribs 322 coincide with each other, for example, the condition exemplified in FIG. 12A. This will cause stress concentration points on the dashed line shown in, for example, FIG. 10A, when such a pattern of the first reinforcing rib 322 is rolled onto the tab 320, it will cause the tab 320 to folding over downward along this dashed line. Similar to the description of FIG. 10B, as exemplified in FIG. 12B, along the first direction F, when the farthest end away from the electrode sheet body 310 and the nearest end approaching the electrode sheet body 310 of two vertically adjacent first reinforcing ribs 322 are aligned, the nearest end of each first reinforcing rib 322 approaching the electrode sheet body 310 is higher than the farthest end of the lower adjacent first reinforcing rib 322 away from the electrode sheet body 310, since more blank areas are generated between two vertically adjacent first reinforcing ribs 322, this is often also undesirable.

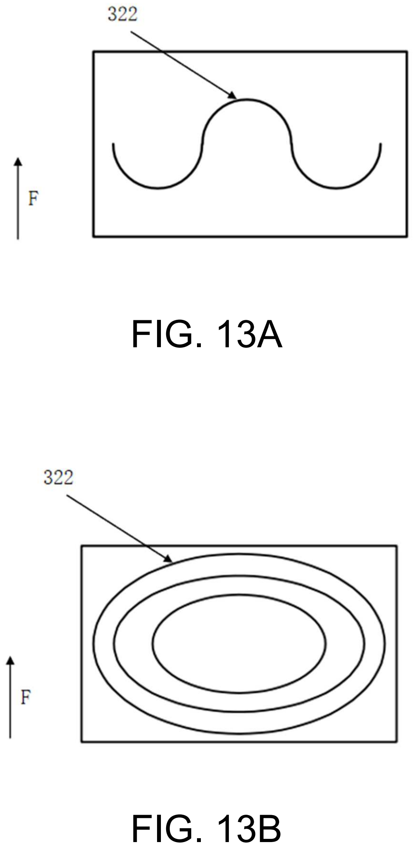

FIG. 13A to FIG. 13B show schematic diagrams of the texture formed by the extension path of the first reinforcing rib 322 according to embodiments of this application. Referring to FIG. 13A and FIG. 13B, the texture of the first reinforcing rib 322 may have a wavy pattern, or may be formed as an elliptical texture, and each first reinforcing rib 322 has a different size, from inside to outside, the size of the first reinforcing rib 322 gradually becomes larger to accommodate smaller adjacent first reinforcing ribs. It may be understood that the texture formed by the extension path of the first reinforcing rib 322 may also have other shapes: for example, linear texture, curved texture, circular texture, rectangular texture, irregular pattern texture, etc. The first reinforcing rib 322 may be, for example, a configuration style of multiple recessed filling areas connected together, the recessed filling area may be, for example, the aforementioned triangular recessed area.

Embodiments of this application also provide a secondary battery 100A/B, including the electrode sheet 300 of any one of the above, and the secondary battery 100A/B may have the beneficial effects described above with respect to the electrode sheet 300.

Embodiments of this application also provide an electronic device 1000, including the secondary battery 100A/B of any one of the above, and the electronic device 1000 may have the beneficial effects described above with respect to the secondary battery 100A/B.

The beneficial technical effects of the application lie at least in that:
the tab of the embodiments of this application is disposed with a reinforcing rib array, the reinforcing rib array includes multiple first reinforcing ribs, in the first direction, every two adjoining first reinforcing ribs are separated from each other, which strengthens the supporting force for the tab and reduces the risk of the tab folding over.

## Claims

1. An electrode sheet (300), comprising:
an electrode sheet body (310); and
a tab (320), protruding from the electrode sheet body (310) in a first direction (F),
wherein
the tab (320) is disposed with a reinforcing rib array (321), and the reinforcing rib array (321) comprises a plurality of first reinforcing ribs (322);
in the first direction (F), every two adjoining first reinforcing ribs (322) are separated from each other.

2. The electrode sheet (300) according to claim 1, wherein
a minimum spacing between the two adjoining first reinforcing ribs (322) in the first direction (F) is **a,**
the tab (320) has a height **h** in the first direction (F),
a ratio of the minimum spacing **a** to the height **h** is in a range of 0.08 to 0.5.

3. The electrode sheet (300) according to claim 2, wherein
the first reinforcing rib (322) has at least one first bending portion (3222),
an inner angle of the first bending portion (3222) faces toward the electrode sheet body (310), in the first direction (F), the first bending portions (3222) of every two adjoining first reinforcing ribs (322) are aligned in the first direction (F) and separated according to the minimum spacing **a.**

4. The electrode sheet (300) according to claim 2, wherein
the ratio of the minimum spacing **a** to the height **h** is in a range of 0.15 to 0.35.

5. The electrode sheet (300) according to claim 2, wherein
a ratio of the minimum spacing **a** to a thickness of the tab (320) is in a range of 200 to 4000.

6. The electrode sheet (300) according to claim 2, wherein
in a direction perpendicular to an extension path of the first reinforcing rib (322), a maximum width of a single first reinforcing rib (322) is **y,**
a ratio of the maximum width **y** to the minimum spacing **a** is in a range of 0.05 to 0.5.

7. The electrode sheet (300) according to claim 1, wherein
each of the first reinforcing ribs (322) has:
first bending portions (3222) and second bending portions (3221) alternately distributed in a second direction, an inner angle of the first bending portion (3222) faces toward the electrode sheet body (310), an inner angle of the second bending portion (3221) faces away from the electrode sheet body (310); and
a connecting portion (3223), connecting the second bending portion (3221) and the first bending portion (3222),
the second direction is perpendicular to the first direction (F),
wherein
the second bending portion (3221) and the first bending portion (3222) are arc transitions, a maximum width of the arc transition in a radius direction is **y1,**
a width of the connecting portion (3223) perpendicular to an extension direction of the connecting portion (3223) is **y2,**
a ratio of the maximum width **y1** to the width **y2** is in a range of 1.2 to 2.5.

8. The electrode sheet (300) according to claim 7, wherein
a spacing between vertices of two adjoining first bending portions (3222) of a single strip of the first reinforcing rib (322) is **b,**
wherein in the second direction, the tab (320) has a maximum width **c1** and a minimum width **c2,**
wherein a ratio of the maximum width **c1** to the spacing **b** is in a range of 1.5 to 3, and/or,
a ratio of the minimum width **c2** to the spacing **b** is in a range of 1.5 to 3.

9. The electrode sheet (300) according to claim 1, wherein
a second reinforcing rib (350) is filled in an area enclosed by the first reinforcing ribs (322) disposed on two sides or one side edge of the tab (320) in the first direction (F) among the first reinforcing ribs (322) and the edge of the tab (320),
a shape and/or dimension of the second reinforcing rib (350) is different from the first reinforcing rib (322).

10. The electrode sheet (300) according to claim 9, wherein
the first reinforcing rib (322) has a portion conformal with the second reinforcing rib (350),
wherein a dimension of the conformal portion is the same as or different from the second reinforcing rib (350).

11. The electrode sheet (300) according to claim 10, wherein
a minimum spacing in the first direction (F) between the conformal portion in the first reinforcing rib (322) adjoining the second reinforcing rib (350) and the second reinforcing rib (350) is **a,**
a minimum spacing in the first direction (F) between any two adjoining first reinforcing ribs (322) in the first direction (F) in the reinforcing rib array (321) is the minimum spacing **a.**

12. The electrode sheet (300) according to claim 1, wherein
in the first direction (F), each of the first reinforcing ribs (322) comprises a nearest end approaching the electrode sheet body (310) and a farthest end distancing from the electrode sheet body (310);
wherein a distance between the farthest end of the first reinforcing rib (322) approaching the electrode sheet body (310) among two adjoining first reinforcing ribs (322) and the electrode sheet body (310) is **d1,** a distance between the nearest end of the first reinforcing rib (322) distancing from the electrode sheet body (310) and the electrode sheet body (310) is **d2,**
the distance **d1** is greater than the distance **d2.**

13. The electrode sheet (300) according to claim 1, wherein
there is no intersection between each first reinforcing rib (322) in the reinforcing rib array (321), and/or
the first reinforcing rib (322) is a strip-shaped groove or a plurality of triangular grooves connected together.

14. A secondary battery (100A/B), comprising:
the electrode sheet (300) according to any one of claims 1-13.

15. An electronic device (1000), comprising:
the secondary battery (100A/B) according to claim 14.
